(19)

**Europäisches Patentamt**
**European Patent Office**
**Office européen des brevets**

(11) **EP 2 189 917 A1**

(12) **EUROPEAN PATENT APPLICATION**

(43) Date of publication:
**26.05.2010 Bulletin 2010/21**

(51) Int Cl.:
***G06F 17/30*** (2006.01)

(21) Application number: **09176240.1**

(22) Date of filing: **17.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **17.11.2008 US 115169 P**
**06.11.2009 US 613731**

(71) Applicant: **FUJITSU LIMITED**
**Kawasaki-shi,**
**Kanagawa 211-8588 (JP)**

(72) Inventors:
• **Stergiou, Stergios**
**Sunnyvale, CA 94086 (US)**
• **Labrou, Yannis**
**Washington, DC, 20003 (US)**
• **Marvit, David**
**San Francisco, CA 94121 (US)**
• **Reinhardt Albert**
**Albany, CA 94706 (US)**

(74) Representative: **Fenlon, Christine Lesley**
**Haseltine Lake LLP**
**Lincoln House, 5th Floor**
**300 High Holborn**
**London WC1V 7JH (GB)**

(54) **Facilitating display of an interactive and dynamic cloud with advertising and domain features**

(57) According to certain embodiments, display of a graphical cloud of a graphical user interface is facilitated. The graphical cloud comprises a user entry field and a domain interface. A set of input terms entered into the user entry field are received. A selected domain entered into the domain interface is received. One or more output terms related to the input terms and specific to the selected domain are determined. Display of the graphical cloud comprising the output terms is facilitated.

*FIG. 1*

**Description**

RELATED APPLICATION

This application claims benefit under 35 U.S.C. § 119(e) of U.S. Provisional Application Serial No. 61/115,169, entitled "An Interactive and Dynamic Cloud of Terms Related to an Input of One or More Terms," Attorney's Docket 073338.0672, filed November 17, 2008, by Stergios Stergiou et al., which is incorporated herein by reference.

TECHNICAL FIELD

This invention relates generally to the field of lexicographical analysis and more specifically to facilitating display of an interactive and dynamic cloud with advertising and domain features.

BACKGROUND

Graphical user interfaces (GUIs) may be used to display results of a search. A user may enter a search query into a GUI, and the GUI may display search results for the query. In certain situations, GUIs might not provide features that extend the capabilities of the GUIs.

SUMMARY OF THE DISCLOSURE

In accordance with the present invention, it is desirable to reduce or eliminate disadvantages and problems associated with previous techniques for facilitating display of output terms related to input terms.

According to certain embodiments, display of a graphical cloud of a graphical user interface is facilitated. The graphical cloud comprises a user entry field and a domain interface. A set of input terms entered into the user entry field are received. A selected domain entered into the domain interface is received. One or more output terms related to the input terms and specific to the selected domain are determined. Display of the graphical cloud comprising the output terms is facilitated.

Certain embodiments of the invention may provide one or more technical advantages. A technical advantage of one embodiment may be that a cloud may include one or more advertisements related to one or more terms associated with a search query. Another technical advantage of one embodiment may be that the cloud may include a domain interface from which a user may select a domain. The cloud may display terms and/or advertisements specific to the selected domain.

Certain embodiments of the invention may include none, some, or all of the above technical advantages. One or more other technical advantages may be readily apparent to one skilled in the art from the figures, descriptions, and claims included herein.

BRIEF DESCRIPTION OF THE DRAWINGS

For a more complete understanding of embodiments of the present invention and its features and advantages, reference is now made to the following description, taken in conjunction with the accompanying drawings, in which:

FIGURE 1 illustrates an embodiment of a system that may be used to facilitate display of an interactive and dynamic cloud with advertising and domain features;
FIGURE 2 illustrates an example of a graphical user interface (GUI) that may be used with the system of FIGURE 1;
FIGURE 3 illustrates an embodiment of a method that may be used to facilitate display of an interactive and dynamic cloud with advertising and domain features; and
FIGURES 4A through 4F illustrate examples of a GUI that may be used with the method of FIGURE 2.

DETAILED DESCRIPTION OF THE DRAWINGS

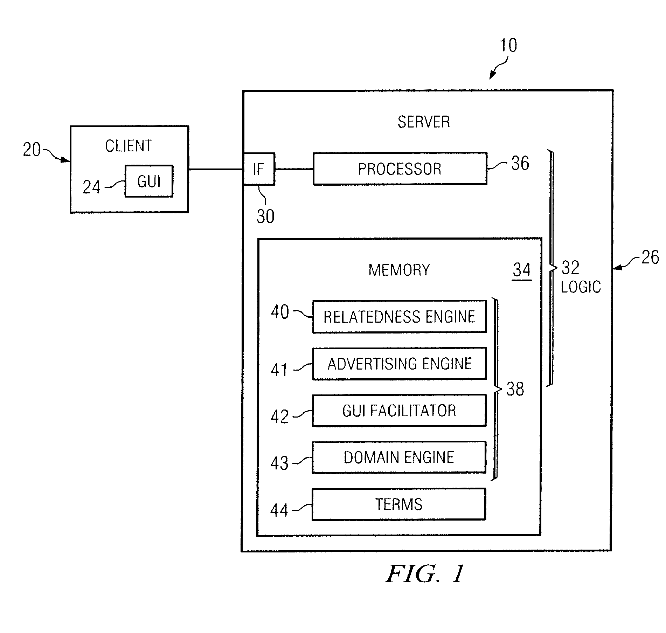

Embodiments of the present invention and its advantages are best understood by referring to FIGURES 1 through 4F of the drawings, like numerals being used for like and corresponding parts of the various drawings.

FIGURE 1 illustrates an embodiment of a system 10 that may be used to facilitate display of an interactive and dynamic cloud with advertising and domain features. The cloud recommends terms that are related to search terms input by a user. The cloud may also include one or more advertisements related to the terms associated with the search. The cloud may also include a domain interface from which a user may select a domain. The cloud may recommend terms and/or display advertisements specific to the selected domain.

In the illustrated embodiment, system 10 includes a client 20 configured to display a graphical user interface (GUI) 24 and a server 26. Server 26 includes an interface (IF) 30, logic 32, and a memory 34. Logic 32 includes a processor 36 and applications 38 such as a relatedness engine 40, a GUI facilitator 42, an advertising engine 41, and a domain engine 43. Memory 34 stores terms 44 and applications 38.

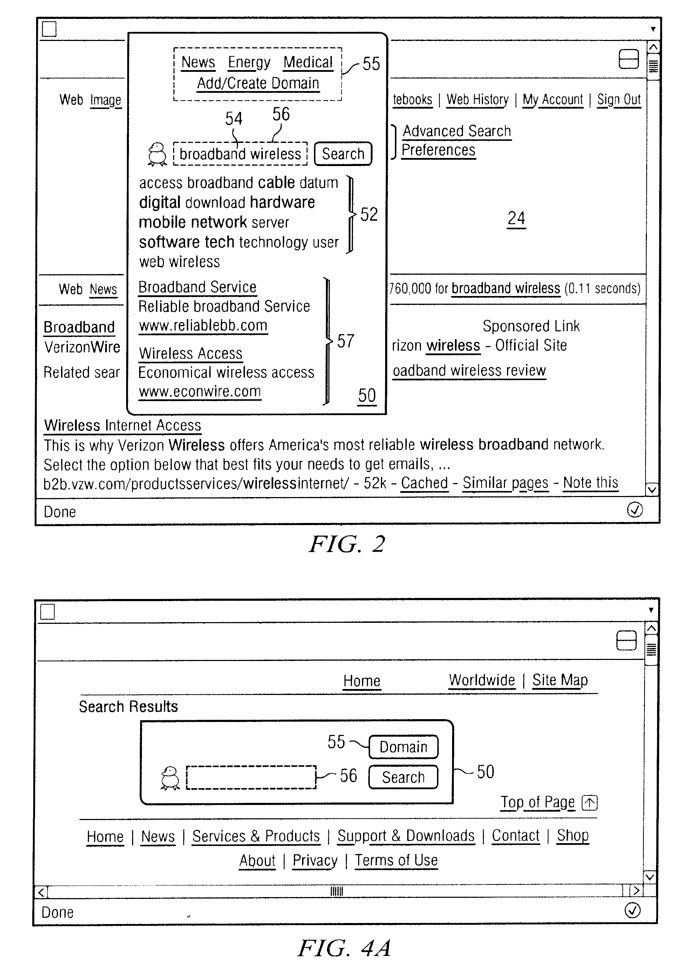

Client 20 may be any suitable device configured to display GUI 24. Client 20 may include a computer with a display, a television, a mobile device (such as a personal data assistant or a cell phone), computerized goggles, or other suitable device. GUI 24 is described in more detail with reference to FIGURE 2.

FIGURE 2 illustrates an example of GUI 24 that includes a cloud 50. In the example, cloud 50 includes terms (such as terms 44), a domain interface 55, and one or more advertisements 57.

In particular embodiments, terms of cloud 50 may include one or more terms recommended to a user, or output terms 52. Output terms 52 are related to a set of input terms 54 (which may include zero, one, two or more input terms 54) entered into a user entry field 56. The cloud terms may also include at least a subset of input terms 54. The cloud terms may be arranged in any suitable order, such as in alphabetical order or in order of relatedness. The terms may have any suitable graphical features, such as any suitable font, font size, font color, underlining, bolding, or italicizing. Graphical features of a term may also include a sound that accompanies moving a cursor over the term or selecting the term.

In particular embodiments, a graphical feature of a term (such as an output term 52) indicates the degree of relatedness of that term to input terms 54. For example, a larger font size may indicate a higher degree of relatedness. The font size may be determined from relatedness in any suitable manner. As an example, the font size may be calculated by normalizing values associated with the relatedness rankings of the terms, and converting the values to a font size. As another example, the font size may be calculated by ranking the terms by relatedness and assigning a predetermined number of terms to each font size.

In particular embodiments, cloud 50 may include one or more graphical elements that a user may utilize to produce a user action that modifies input terms 54, which results in updated output terms 52 displayed in cloud 50. Examples of graphical elements include a link, a slide bar, or a radio button that a user may select, slide, or click, respectively. In particular embodiments, cloud 50 may provide a handle so output terms 52 may pass programmatically to a module, a webpage, a form, an application programming interface (API), or an application.

In particular embodiments, advertisements 57 may include advertisements used promote a product or service, such as text advertisements or sponsored links. Advertisements 57 may be related to terms (such as input terms 54 and/or output terms 52) and may be updated as the terms change. Advertisements 57 may displayed in close proximity to the terms. Advertisements 57 are described in more detail below.

In particular embodiments, domain interface 55 allows a user to select a domain (for example, a news, energy, medical, or add/create domain) to initiate display of output terms 52 and/or advertisements 57 specific to the selected domain. A term (or advertisement) may be regarded as specific to a domain if the term (or advertisement) has a significant meaning in the domain and/or the degree of relatedness of the term (or advertisement) is determined by the domain. In particular embodiments, the selected domain may have a distinguishing graphical feature, such as a different color or larger font size.

In particular embodiments, domain interface 55 may present a list of domains from which a user can select a domain. A domain may be presented using any suitable graphical element, such as using text or a tab. In other embodiments, domain interface 55 may comprise a domain button that may be selected to display a domain menu with a domain list from which a user can select a domain. The domain list, domain button, and domain menu may be located at any suitable location of cloud 50, such as in the illustrated example. Domain interface 55 is described in more detail below.

Cloud 50 may be used in any suitable process, such as a search process, a tagging process, or a recommendation process. In a search process, output terms 52 of cloud 50 may be used as the input to a search engine query or another system or application offering a query interface.

In a tagging process, one or more output terms 52 may be used to annotate content (documents, parts of documents, images, videos, audio, news articles, etc.) with tags. Attempting to tag content may activate cloud 50. Terms may be selected from cloud 50 to tag the content.

In a recommendation process, one or more output terms 52 may be used as input for the invocation of an application. For example, if cloud 50 displays websites (or links to websites), the user may select a website to open the website. If cloud 50 displays songs (or links to song files), the user may select a song to play the song. GUI 24 is described in more detail with reference to server 26.

Cloud 50 may pop up (or appear) or pop down (or disappear) in any suitable manner. In particular embodiments, cloud 50 may pop up when, for example, a cursor moves into user entry field 56 or other designated area or when the user device moves in a particular translating and/or rotating movement. Cloud 50 may disappear or fade away when, for example, the cursor moves outside of cloud 50 or field 56, a predetermined amount of user inaction time has passed, the user device moves in a particular translating and/or rotating movement, or a user action, such as clicking a close button or icon, has occurred.

In particular embodiments, cloud 50 may pop up when a cursor moves over (and perhaps stays on) an object, such as a word, link, or other object in a document, application, or webpage. In the embodiments, cloud 50 may accept a first input programmatically and display output terms 52 related to or derived from the object. An output term 52 may be selected to formulate a query to submit to another module, web page, form, API, application, or search engine.

In particular embodiments, cloud 50 is interactive, that is, a user may perform a user action to interact with cloud 50. Examples of user actions include clicking, dragging, or otherwise selecting a term; and entering, modifying, or removing a term in a field. Other examples of user actions include movement of the user device in a predetermined manner (translating and/or rotating the device) by the user, or selection of a part of the device (a keyboard or pad button or soft key) by the user. In particular embodiments, if the cursor is moved over a term, the term may change a graphical feature (for example, color), indicating that the term may be selected for a particular action (for example, removal).

In particular embodiments, cloud 50 is dynamic, that is, cloud 50 may update in response to a user action. For example, cloud 50 may update the terms, the graphical features (such as font size) of the terms, or other information.

In particular embodiments, cloud 50 may be pre-populated with output terms 52 before information has been entered into a field of cloud 50. The pre-populated output terms 52 may be selected according to context parameters of a context. Examples of a context may include the context of a mobile device on which cloud 50 is located. Examples of parameters of such a context include the features of the device (such as location of the device or type of device), features of the user of the device (such as user history or user's community's history), temporal features (such as time of day, date, day of week, or month), and features driven by an advertiser.

In particular embodiments, a term may be added to or removed or excluded from input terms 54 of cloud 50 in response to a user action or other action (for example, programmatically passing a term from another application, module, or interface as input to cloud 50). For example, a user action may cause an input term to be updated. Updating the input term leads to a call to relatedness engines 40 to receive updated output terms. Cloud 50 is then updated with the updated output terms.

In particular embodiments, cloud 50 may be updated with new output terms 52 related to existing input terms 54. For example, the new output terms 52 may be identified by returning deeper terms in the present domain, where "deeper" may mean more specialized, less general, and/or less common. As another example, the new output terms 52 may be identified by determining relatedness according to a different domain (which, for example, may be a set of cloud-associated predefined domains).

An input term 54 may be removed from cloud 50 in any suitable manner. For example, a term may be removed by deleting the term from a field. As another example, a term may be removed by moving a cursor over the term, causing the term to change a graphical feature (for example, change to red or struck-through font) indicating that the term will be removed if selected, and then selecting the term. As another example, a term may be removed by moving the cursor over the term and double-clicking on the term.

An input term 54 may be removed from a search query in any suitable manner. For example, a term may be removed by adding the term to the query in the negative, e.g., in the form "and not [term]." As another example, a term may be removed by right clicking or single clicking and holding until there is a graphical feature change (such as a change in color or activation of a sound) indicating that the word is in a negative state, and then selecting the term.

Other suitable user actions may be performed to yield particular responses. In certain embodiments, clicking on different parts of a term may initiate addition or removal of the term. For example, clicking on the left side initiates addition, and clicking on the right side initiates negation (or vice-versa). In certain embodiments, clicking on terms in different regions of cloud 50 or in different clouds 50 may initiate addition or removal of the term. For example, clicking on a term in a cloud designated for adding terms initiates addition, and clicking on a term in a cloud designated for removing terms initiates removal.

In particular embodiments, for example, when GUI 24 is implemented in a mobile device, user actions that reduce the need for typing may be implemented. As an example, cloud 50 may appear or disappear or otherwise updated based movement, such as translation, rotation, and/or other gesture, of the user device. In certain cases, detecting a first type of movement makes cloud 50 appear, and detecting a second type of movement makes cloud 50 disappear. As another example, cloud 50 may be enabled in a webpage as determined by a "browser detect" targeted to mobile devices. As another example, keyboard or pad button or soft key that may bring up cloud 50 in the context of an application or browser.

Cloud 50 may be implemented using code that includes instructions for displaying cloud 50. Cloud code may include any suitable code (for example, JavaScript instructions) embodied in any suitable manner (for example, as a toolbar, plug-in, add-on, or extension). In one example, the cloud code may store or have access to files with a list of predefined websites. When a user's web browser visits a predefined website, the cloud code draws cloud 50 as the predefined website's content is rendered in the web browser. The cloud code may update the list of predefined websites, for example, periodically or at web browser start-up.

Cloud code may be provided in any suitable manner. In certain examples, a website visited by a user's computer may incorporate the cloud code into the source code of the user's web browser. When a search interface of the visited website is accessed, cloud 50 appears. In other examples, cloud code may be installed into a web browser. In yet other examples, cloud code may be integrated natively within a web browser. In yet other examples, an application that includes cloud code may be installed on a computer.

Referring back to FIGURE 1, a term 44 stored in memory 34 may be a word or a phrase that denotes itself or an object by reference. For example, a term 44 may denote itself as "tree" may denote the concept of a tree in multiple senses. Examples of terms 44 that denote objects by reference include a webpage (the object) denoted by its title (the term), a summary of its contents (the term), or a phrase that describes its content (the term); a recipe (the object) denoted by its title (the term); a user (the object) denoted by a username (the term); a song or other multimedia object (the object) denoted by its title (the term); an artist (the object) denoted by the artist's name (the term); a document (the object) denoted by its title or authors (the term); and a movie (the object) denoted by its title (the term).

In the illustrated embodiment, GUI facilitator 42 facilitates display of GUI 24. In particular embodiments, GUI facilitator 42 may send instructions on whether a specific website should display cloud 50 the content of cloud 50, and/or the look of cloud 50.

Relatedness engine 40 determines relatedness among terms. Relatedness may be defined in any suitable manner. In particular embodiments, relatedness may be derived according to affinity. Any suitable definition of affinity may be used, for example:

1. Basic Affinity

a. The basic affinity (A) between terms A and B may be defined as the ratio of the number of co-occurrence contexts that include both terms A and B over the number of co-occurrence contexts that include either of the terms A or B:

$$A(A,B) = |AB|/|A \text{ or } B|$$

Two terms may co-occur if they each appear at least once within the same co-occurrence context or "containers". Examples of co-occurrence contexts include a document and a paragraph. The following is a list of example containers and example corresponding term types:

| Container or co-occurrence context | Term |
| --- | --- |
| Webpage | Word or phrase |
| Document | Word or phrase |
| Recipe | Ingredient |
| Web session | Webpage |
| Communities a user is member of | Community or social group |
| Movie collection of a user | Movie |
| Music collection of a user | Song or artist |

b. The basic affinity (A) between terms A and B may be defined as the ratio of the number of co-occurrence contexts that include both terms A and B over the maximum of either the number of co-occurrence contexts that include A or the number of co-occurrence contexts that include B:

$$A(A,B) = |AB|/\max(|A|,|B|)$$

2. Directional Affinity

The directional affinity (DAff) between terms A and B may be defined as the conditional probability of observing B, given that A was observed in a co-occurrence context:

$$DAff(A, B) = |AB| / |A|$$

That is, directional affinity may be the number of co-occurrence contexts that include both terms A and B, over the number of co-occurrence contexts that include term A. Generally, DAff(A,B) differs from DAff(B,A).

3. <u>Differential Directional Affinity</u>

The differential directional affinity (DiffDAff) between terms A and B may be defined as the directional affinity between terms A and B minus a factor that accounts for the common-ness of the term B in the corpus. The common-ness of the term B in the corpus may be a statistical value over the basic affinity or directional affinity values of the term B towards the other terms in the corpus. In particular embodiment, the common-ness of the term B in a corpus may be the average affinity (AA) of term B, which yields the following definition of differential directional affinity:

$$DiffDAff(A,B) = DA(A,B) - AA(B)$$

The average affinity (AA), or average directional affinity, of a term B may be defined as:

$$AA(B) = AVERAGE\_x \; DAff(x, B)$$

That is, average affinity may be the average of the directional affinities of a term B over the other terms in the co-occurrence contexts.

In particular embodiments, the affinities between terms may be used to construct a weighted directed graph of terms, in which the weight of the directed edge between terms denotes their absolute or relative proximity with respect to a domain. The graphs may be derived from collocation of terms in a single container or across one or more collections of multiple containers. For example, particular embodiments may use a collection of documents (containers) in a particular domain and the collocation of words or phrases (terms) in each document to create a weighted directed graph of terms, in which the weights denote the proximity between terms in the domain.

In particular embodiments, a domain may be vertical. Examples of vertical domains include domains associated with particular topics such as patents, medical information, financial information, telecommunications, recipes, etc. A domain may encompass one or more particular media types. Examples of media types include images, videos, movies, news, scientific articles, advertisements, etc.

In particular embodiments, a domain may encompass one or more particular contexts. Examples of contexts include web sites, documents, collections, etc. A domain may relate to one or more particular users. Examples of such domains include one or more web sessions of the users, navigation histories of the users, one or more preferences of the users, data (such as e-mail) related to the users, one or more queries from the users to one or more search engines, and/or other domain.

Relatedness may be determined in any suitable manner. In particular embodiments, the relatedness may be determined according to any suitable calculation. An example of a calculation may be found in U.S. Patent Application, Serial No. 12/368689, titled, "Determining Words Related to a Given Set of Words," filed February 10, 2009, which is incorporated herein by reference. The calculation operates on a directed weighted graph of terms indicating the proximity of the terms. The calculation uses the input terms to the cloud as input. The output of the calculation is used as the output terms displayed in cloud 50. In particular embodiments, the relatedness may be determined by computing the relatedness of possible terms in a domain to at least a subset of the most recent input terms 54 of cloud 50, and returning the terms with the highest relatedness to input terms 54.

In particular embodiments, output terms 54 may be determined from user search queries. In the embodiments, queries with related terms may be determined. Queries that include input terms 54 may be ranked, for example, by their decreasing use frequency and then matched. A predetermined amount of the top ranked queries may be selected as queries with related terms.

In particular embodiments, term relatedness in reference to a specific domain or combination of domains does not limit the utility in a search, tagging, or recommendation process to that domain or combination of domains. For example, although relatedness may have been defined in reference to a domain of pharmaceutical patents, the terms may be used in a search process in a domain of news stories.

Advertising engine 41 identifies advertisements 57 to be included in cloud 50. Advertising engine 41 may coordinate with relatedness engine 40 to identify advertisements 57 that are related to at least one term of a set of terms, such as input terms 54 and/or output terms 52. Advertising engine 41 may coordinate with domain engine 43 to identify advertisements 57 that are specific to a domain. Advertising engine 41 may update advertisements 57 as the terms change. For example, advertising engine 41 may detect a change in the set of terms and identify next advertisements 57 related to at least one term of the changed set. As another example, advertising engine 41 may detect a change in the selected domain and identify next advertisements 57 specific to the domain.

Domain engine 43 receives a domain selected by a user through domain interface 55 and identifies at least a subset of output terms 52 and/or advertisements 57 specific to the selected domain. Cloud 50 may be then be updated with the identified terms and/or advertisements 57. Subsequent queries may yield output terms 52 and/or advertisements 57 specific to the selected domain, until a new domain is selected.

Domain engine 43 may receive the selected domain in any suitable manner. In particular embodiments, domain interface 55 may comprise a list of domains from which a user can select a domain. In these embodiments, domain engine 43 receives the domain as the user selects from the list of domains. In other embodiments, domain interface 55 may comprise a domain button that may be selected to display a domain menu with a domain list from which a user can select a domain. In these embodiments, domain engine 43 determines that the button has been selected and facilitates display of a domain menu comprising the domain list. Domain engine 43 receives the domain as the user selects from the domain list.

Domain engine 43 may list any suitable domain in the domain list. In particular embodiments, domain engine 43 lists domains that are highly related to the search query and may change domains as the search query changes. In particular embodiments, domain engine 43 may list more related domains before less related domains.

In particular embodiments, domain engine 43 may add a domain to the list of domains. In the embodiments, domain engine 43 receives an add domain request from a user. Domain engine 43 may request that the user provide one or more domain search terms that describe the domain the user would like to add. Domain engine 43 may search for one or more domains related to the domain search terms and then facilitate display of the domains. Domain engine 43 may receive a domain selected from the displayed domains and add the selected domain to the domain list.

Domain engine 43 may create a new domain and make the domain available to one or more other users. Domain engine 43 may create a domain in any suitable manner. In particular embodiments, domain engine 43 may receive from a user a create domain request and domain material for the domain. Domain material may include any material that is to be associated with the domain. Example of domain material include a domain name, terms that define the domain, and/or websites and/or documents that belong to the domain. Domain engine 43 may create the domain and map the domain to the domain material.

In particular embodiments, domain engine 43 may automatically (independently of a create domain request) create a domain from domain material associated with a user. Examples of such domain material include material on the user's computer (for example, files or bookmarked web sites) and/or traffic to/from the user's computer (for example, email or web traffic).

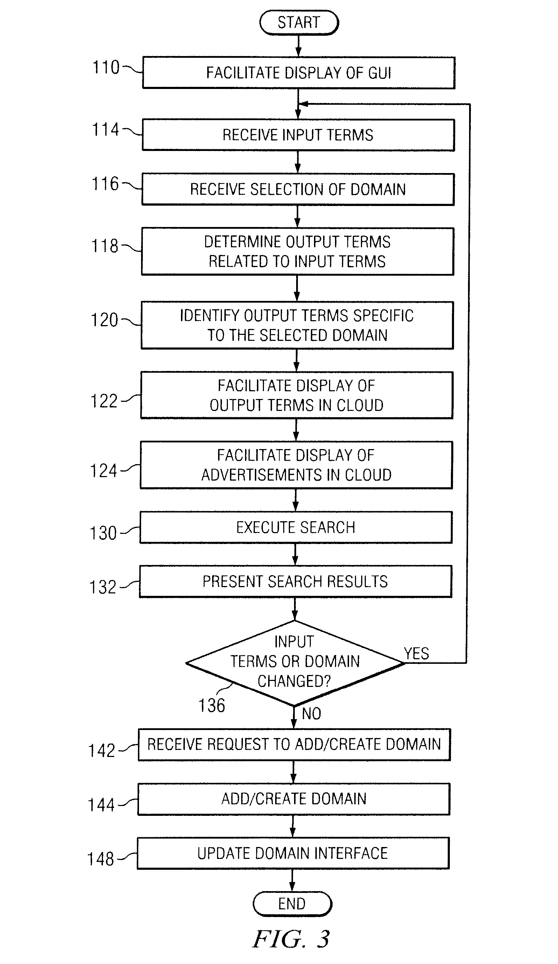

FIGURE 3 illustrates an embodiment of a method that may be used to facilitate display of an interactive and dynamic cloud 50 with advertising and domain features. The embodiment is described with reference to FIGURES 4A through 4F.

The method starts at step 110, where GUI facilitator 42 facilitates display of GUI 24 at client 20 (FIGURE 4A). GUI 24 includes user entry field 56 and an empty cloud 50. Cloud 50 may appear when the cursor is moved over user entry field 56. In some embodiments, cloud 50 may include user entry field 56 and domain interface 55.

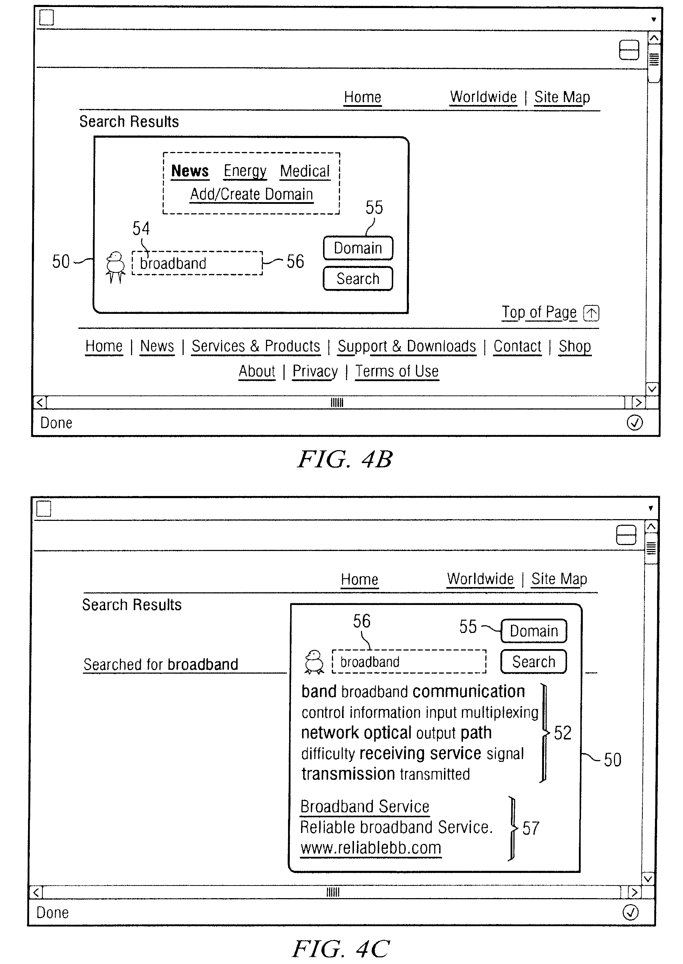

One or more input terms 54 are received through user entry field 56 at step 114 (FIGURE 4B). An input term 54 may be received as the user types each search term. In the example, "broadband" is entered. A selected domain is received by domain engine 43 through domain interface 55 at step 116. In the example, the "News" domain is selected and shown in bold. If no domain is selected, a default domain comprising all domains is used. If the default domain is used, then selection of output terms 52, advertisements 57, and search results 58 may be performed with no restrictions on domain.

Output terms 52 related to the input terms 54 are determined at step 118. Domain engine 43 identifies output terms 52 specific to the selected domain at step 120. Display of cloud 50 with output terms 52 related to the input terms 54 and specific to the selected domain is facilitated at step 122 (FIGURE 4C). Cloud 50 may display output terms 52 as recommendations for additional search terms. Output terms 52 may appear as the user is typing in the search terms. Output terms 52 may have font sizes that indicate the relatedness of output terms 52 to input terms 54. Display of advertisements 57 of cloud 50 is facilitated at step 124 (FIGURE 4C). Advertisements 57 may be related to terms associated with the search (such as input terms 54 and/or output terms 52) and/or may be specific to the selected domain

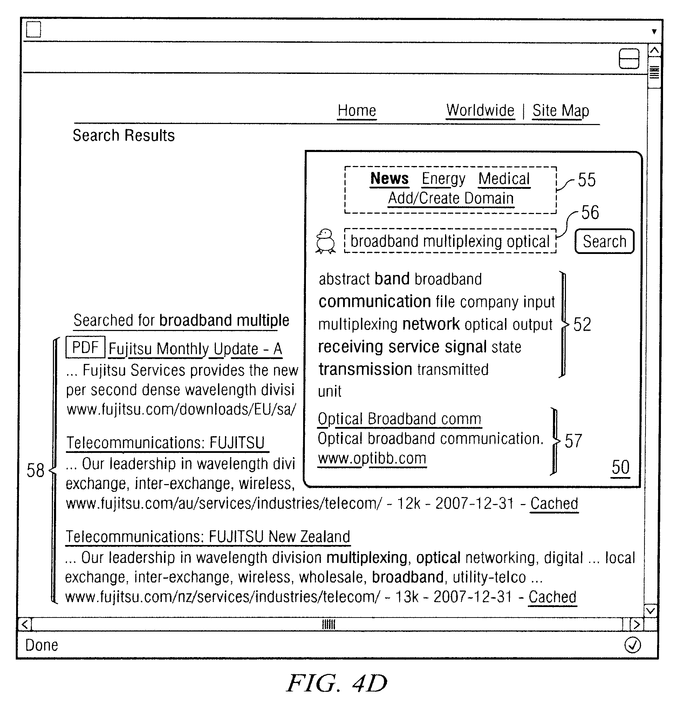

The search query is executed at step 130. The query may be executed automatically when a term is added to or deleted from the query and/or when a domain is selected or changed. In other examples, the query may be executed in response to an explicit request for execution sent by, for example, selecting a search button or may be executed after a predetermined period of inactivity, such as inactivity in the range of 10-20, 20-24, or 40-60 seconds. Search results 58 are presented at step 132 (FIGURE 4D). Search results 58 may be presented on the same page and in the vicinity of cloud 50.

Input terms 54 and/or the domain may have changed at step 136 (FIGURE 4D). For example, the user may click on an output term 52 to add the output term 52 to or remove the output term 52 from the search query. Every time input terms 54 and/or the domain changes, output terms 52 of cloud 50 are updated. In the example, "multiplexing" and "optical" are added to "broadband," yielding different output terms 52. If input terms 54 and/or the domain is different, the method returns to step 114. If input terms 54 and/or the domain has not changed at step 126, the method proceeds to step 130.

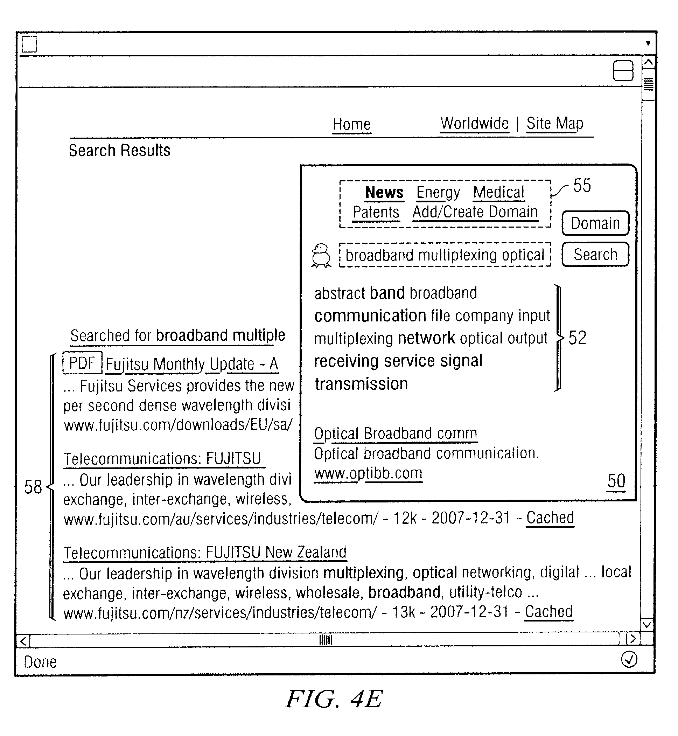

A request from the user to add and/or create (add/create) a domain is received by domain engine 43 at step 142. In the example, the request is to add/create a "Patents" domain. Domain engine 43 adds/creates the domain at step 144 and updates the domain interface 55 at step 148 (FIGURE 4E). The method then ends.

A component of the system and apparatuses described herein may include an interface, logic, memory, and/or other suitable element. An interface receives input, sends output, processes the input and/or output, and/or performs other suitable operation. An interface may comprise hardware and/or software.

Logic performs the operations of the component, for example, executes instructions to generate output from input. Logic may include hardware, software, and/or other logic. Logic may be encoded in one or more tangible media and may perform operations when executed by a computer. Certain logic, such as a processor, may manage the operation of a component. Examples of a processor include one or more computers, one or more microprocessors, one or more applications, and/or other logic.

In particular embodiments, the operations of the embodiments may be performed by one or more computer readable media encoded with a computer program, software, computer executable instructions, and/or instructions capable of being executed by a computer. In particular embodiments, the operations of the embodiments may be performed by one or more computer readable media storing, embodied with, and/or encoded with a computer program and/or having a stored and/or an encoded computer program.

A memory stores information. A memory may comprise one or more tangible, computer-readable, and/or computer-executable storage medium. Examples of memory include computer memory (for example, Random Access Memory (RAM) or Read Only Memory (ROM)), mass storage media (for example, a hard disk), removable storage media (for example, a Compact Disk (CD) or a Digital Video Disk (DVD)), database and/or network storage (for example, a server), and/or other computer-readable medium.

Modifications, additions, or omissions may be made to the system and apparatuses described herein without departing from the scope of the invention. The components of the system and apparatuses may be integrated or separated. Moreover, the operations of the system and apparatuses may be performed by more, fewer, or other components. Additionally, operations of the system and apparatuses may be performed using any suitable logic comprising software, hardware, and/or other logic. As used in this document, "each" refers to each member of a set or each member of a subset of a set.

Modifications, additions, or omissions may be made to the methods herein without departing from the scope of the invention. The methods may include more, fewer, or other steps. Additionally, steps may be performed in any suitable order.

A computer program for performing certain functions may be embodied as one or more tangible computer readable storage media storing logic which when executed is operable to have the effect that the functions are performed. Any functions or processes performed by a computer as a result of a program being executed may be performed on a single computer, or may be performed by a network or some other group of computers.

Embodiments of the present invention extend to the following statements:

Statement 1. One or more tangible computer readable storage media storing logic when executed operable to:

> facilitate display of a graphical cloud of a graphical user interface, the graphical cloud comprising a user entry field and a domain interface;
> receive a set of input terms entered into the user entry field;
> receive a selected domain entered into the domain interface;
> determine one or more output terms related to the input terms and specific to the selected domain; and
> facilitate display of the graphical cloud comprising the output terms.

Statement 2. The media of statement 1, the logic when executed further operable to:

receive an add domain request and one or more domain search terms;
search for one or more domains related to the domain search terms;
facilitate display of the graphical cloud comprising the one or more domains; and
receive a selection of the one or more domains.

Statement 3. The media of statement 1 or 2, the logic when executed further operable to:

receive a create domain request requesting creation of a new domain;
receive domain material for the domain;
mapping the new domain to the domain material; and
facilitate display of the graphical cloud comprising the new domain.

Statement 4. The media of any of the preceding statements, the logic when executed further operable to:

create a domain; and
make the created domain available to one or more other users.

Statement 5. The media of any of the preceding statements, the logic when executed further operable to:

facilitate display of the domain interface comprising the selected domain having a distinguishing graphical feature.

Statement 6. The media of any of the preceding statements:

the domain interface comprising a list of domains; and
the logic when executed further operable to receive the selected domain by receiving a domain selected from the list of domains.

Statement 7. The media of any of the preceding statements:

the domain interface comprising a domain button; and
the logic when executed further operable to receive the selected domain by:

determining that the domain button has been selected;
facilitating display of a domain menu comprising a list of domains; and
receiving a domain selected from the list of domains.

Statement 8. The media of any of the preceding statements, the logic when executed further operable to:

access cloud code comprising one or more instructions for displaying the graphical cloud; and
facilitate display of the graphical cloud according to the cloud code.

Statement 9. The media of any of the preceding statements, the logic when executed further operable to:

pre-populate the cloud with one or more pre-population output terms.

Statement 10. One or more tangible computer readable storage media storing logic when executed operable to:

facilitate display of a graphical cloud of a graphical user interface, the graphical cloud comprising a user entry field;
receive a set of input terms entered into the user entry field;
determine one or more output terms related to the input terms;
identify one or more advertisements related to at least one term of a set comprising the input terms and the output terms; and
facilitate display of the graphical cloud comprising the one or more advertisements.

Statement 11. The media of statement 10, the logic when executed further operable to identify one or more advertisements by:

identifying one or more advertisements specific to a selected domain.

Statement 12. The media of statement 10 or 11, the logic when executed further operable to:

detect a change in the set comprising the input terms and the output terms;
identify one or more next advertisements related to at least one term of the changed set; and
facilitate display of the graphical cloud comprising the one or more next advertisements.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

**Claims**

1.   A method comprising:

facilitating display of a graphical cloud of a graphical user interface, the graphical cloud comprising a user entry field and a domain interface;
receiving a set of input terms entered into the user entry field;
receiving a selected domain entered into the domain interface;
determining one or more output terms related to the input terms and specific to the selected domain; and
facilitating display of the graphical cloud comprising the output terms.

2.   The method of Claim 1, further comprising:

receiving an add domain request and one or more domain search terms;
searching for one or more domains related to the domain search terms;
facilitating display of the graphical cloud comprising the one or more domains; and
receiving a selection of the one or more domains.

3.   The method of Claim 1 or 2, further comprising:

receiving a create domain request requesting creation of a new domain;
receiving domain material for the domain;
mapping the new domain to the domain material; and
facilitating display of the graphical cloud comprising the new domain.

4.   The method of any of Claims 1 to 3, further comprising:

creating a domain; and
making the created domain available to one or more other users.

5.   The method of any of Claims 1 to 4, further comprising:

facilitating display of the domain interface comprising the selected domain having a distinguishing graphical feature.

6.   The method of any of Claims 1 to 5:

the domain interface comprising a list of domains; and
the receiving the selected domain further comprising receiving a domain selected from the list of domains.

7.   The method of any of Claims 1 to 6:

the domain interface comprising a domain button; and
the receiving the selected domain further comprising:

determining that the domain button has been selected;
facilitating display of a domain menu comprising a list of domains; and
receiving a domain selected from the list of domains.

**8.** The method of any of Claims 1 to 7, further comprising:

accessing cloud code comprising one or more instructions for displaying the graphical cloud; and
facilitating display of the graphical cloud according to the cloud code.

**9.** The method of any of Claims 1 to 8, further comprising:

pre-populating the cloud with one or more pre-population output terms.

**10.** A computer program, which, when executed, causes a computer to perform the method according to any of claims 1 to 9.

**11.** A method comprising:

facilitating display of a graphical cloud of a graphical user interface, the graphical cloud comprising a user entry field;
receiving a set of input terms entered into the user entry field;
determining one or more output terms related to the input terms;
identifying one or more advertisements related to at least one term of a set comprising the input terms and the output terms; and
facilitating display of the graphical cloud comprising the one or more advertisements.

**12.** The method of Claim 11, the identifying one or more advertisements further comprising:

identifying one or more advertisements specific to a selected domain.

**13.** The method of Claim 11 or 12, further comprising:

detecting a change in the set comprising the input terms and the output terms;
identifying one or more next advertisements related to at least one term of the changed set; and
facilitating display of the graphical cloud comprising the one or more next advertisements.

**14.** A computer program, which, when executed, causes a computer to perform the method according to any of claims 11 to 13.

10

SERVER

20 — CLIENT

24 — GUI

30

IF

PROCESSOR — 36

32
LOGIC

26

MEMORY 34

40 — RELATEDNESS ENGINE

41 — ADVERTISING ENGINE

42 — GUI FACILITATOR

43 — DOMAIN ENGINE

38

44 — TERMS

*FIG. 1*

News   Energy   Medical   ⌐55
Add/Create Domain

Web Image                                tebooks | Web History | My Account | Sign Out

54   56

Advanced Search
Preferences

broadband wireless    Search

access broadband cable datum
digital download hardware
mobile network server          } 52
software tech technology user
web wireless

24

Web News      Broadband Service
              Reliable broadband Service        760,000 for broadband wireless (0.11 seconds)
Broadband     www.reliablebb.com
VerizonWire                          } 57         Sponsored Link
              Wireless Access                   rizon wireless - Official Site
Related sear  Economical wireless access
              www.econwire.com         50       oadband wireless review

Wireless Internet Access
This is why Verizon Wireless offers America's most reliable wireless broadband network.
Select the option below that best fits your needs to get emails, ...
b2b.vzw.com/productsservices/wirelessinternet/ - 52k - Cached - Similar pages - Note this

Done

**FIG. 2**

Home              Worldwide | Site Map

Search Results

55 ⌐ Domain

56  Search   ⌐50

Top of Page ⬆

Home | News | Services & Products | Support & Downloads | Contact | Shop
About | Privacy | Terms of Use

Done

**FIG. 4A**

START

110 — FACILITATE DISPLAY OF GUI

114 — RECEIVE INPUT TERMS

116 — RECEIVE SELECTION OF DOMAIN

118 — DETERMINE OUTPUT TERMS RELATED TO INPUT TERMS

120 — IDENTIFY OUTPUT TERMS SPECIFIC TO THE SELECTED DOMAIN

122 — FACILITATE DISPLAY OF OUTPUT TERMS IN CLOUD

124 — FACILITATE DISPLAY OF ADVERTISEMENTS IN CLOUD

130 — EXECUTE SEARCH

132 — PRESENT SEARCH RESULTS

INPUT TERMS OR DOMAIN CHANGED?    YES

136    NO

142 — RECEIVE REQUEST TO ADD/CREATE DOMAIN

144 — ADD/CREATE DOMAIN

148 — UPDATE DOMAIN INTERFACE

END

*FIG. 3*

Home          Worldwide | Site Map

Search Results

News  Energy  Medical
Add/Create Domain

55

54

50 — broadband — 56

Domain

Search

Top of Page ⬆

Home | News | Services & Products | Support & Downloads | Contact | Shop
About | Privacy | Terms of Use

Done                                                    ✓

## FIG. 4B

Home          Worldwide | Site Map

Search Results

56              55 — Domain

Searched for broadband        broadband        Search

band broadband communication
control information input multiplexing
network optical output path          } 52
difficulty receiving service signal
transmission transmitted                                    — 50

Broadband Service
Reliable broadband Service.          } 57
www.reliablebb.com

Done                                                    ✓

## FIG. 4C

Home          Worldwide | Site Map

Search Results

**News**   Energy   Medical   ⌐55
Add/Create Domain
                                      ⌐56
🐤  broadband multiplexing optical      [ Search ]

abstract **band** broadband
**communication** file company input
multiplexing **network** optical output  } 52
receiving **service signal** state
**transmission** transmitted
unit

Optical Broadband comm
Optical broadband communication.  } 57
www.optibb.com
                                         50

Searched for **broadband multiple**

[ PDF ] Fujitsu Monthly Update - A
... Fujitsu Services provides the new
per second dense wavelength divisi
www.fujitsu.com/downloads/EU/sa/

Telecommunications: FUJITSU
58 {  ... Our leadership in wavelength divi
exchange, inter-exchange, wireless,
www.fujitsu.com/au/services/industries/telecom/ - 12k - 2007-12-31 - Cached

Telecommunications: FUJITSU New Zealand
... Our leadership in wavelength division **multiplexing**, **optical** networking, digital ... local
exchange, inter-exchange, wireless, wholesale, **broadband**, utility-telco ...
www.fujitsu.com/nz/services/industries/telecom/ - 13k - 2007-12-31 - Cached

Done                                                    ⊘

*FIG. 4D*

Home          Worldwide | Site Map

**Search Results**

News  Energy  Medical  ⟋ 55
Patents  Add/Create Domain

[ Domain ]

🐦 broadband multiplexing optical    [ Search ]

Searched for **broadband multiple**

[ PDF ] Fujitsu Monthly Update - A
... Fujitsu Services provides the new
per second dense wavelength divisi
www.fujitsu.com/downloads/EU/sa/

Telecommunications: FUJITSU

58 { ... Our leadership in wavelength divi
exchange, inter-exchange, wireless,
www.fujitsu.com/au/services/industries/telecom/ - 12k - 2007-12-31 - Cached

abstract **band** broadband
**communication** file company input
multiplexing **network** optical output } 52
receiving service signal
transmission

Optical Broadband comm
Optical broadband communication.
www.optibb.com                          50

Telecommunications: FUJITSU New Zealand
... Our leadership in wavelength division **multiplexing**, **optical** networking, digital ... local
exchange, inter-exchange, wireless, wholesale, **broadband**, utility-telco ...
www.fujitsu.com/nz/services/industries/telecom/ - 13k - 2007-12-31 - Cached

Done                                          ✓

*FIG. 4E*

Europäisches
Patentamt

European
Patent Office

Office européen
des brevets

# EUROPEAN SEARCH REPORT

Application Number

EP 09 17 6240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHATZ B ET AL: "FEDERATED SEARCH OF SCIENTIFIC LITERATURE" COMPUTER, IEEE SERVICE CENTER, LOS ALAMITOS, CA, US, vol. 32, no. 2, 1 February 1999 (1999-02-01), pages 51-59, XP000824120 ISSN: 0018-9162 * page 55, column 1, line 39 - page 56, column 1, line 28; figure 2 * | 1-14 | INV. G06F17/30 |
| X | SCHATZ B R ET AL: "Interactive Term Suggestion for Users of Digital Libraries: Using Subject Thesauri and Co-occurrence Lists for Information Retrieval" PROCEEDINGS OF THE ACM INTERNATIONAL CONFERENCE ON DIGITALLIBRARIES, XX, XX, 1 January 1996 (1996-01-01), pages 126-133, XP002349339 * the whole document * | 1-14 | |
| X | COOPER J W ET AL: "Lexical navigation: visually prompted query expansion and refinement" PROCEEDINGS OF THE 2ND. ACM INTERNATIONAL CONFERENCE ON DIGITAL LIBRARIES. PHILADELPHIA, JULY 23 - 26, 1997; [PROCEEDINGS OF THE ACM INTERNATIONAL CONFERENCE ON DIGITAL LIBRARIES], NEW YORK, ACM, US, vol. CONF. 2, 23 July 1997 (1997-07-23), pages 237-246, XP002324531 ISBN: 978-0-89791-868-8 * the whole document * | 1-14 | TECHNICAL FIELDS SEARCHED (IPC) G06F |

-/--

The present search report has been drawn up for all claims

| Place of search | Date of completion of the search | Examiner |
|---|---|---|
| Munich | 26 February 2010 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 189 917 A1

Europäisches
Patentamt
European
Patent Office
Office européen
des brevets

**EUROPEAN SEARCH REPORT**

Application Number

EP 09 17 6240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WHITE ET AL: "Examining the effectiveness of real-time query expansion" INFORMATION PROCESSING & MANAGEMENT, ELSEVIER, BARKING, GB, vol. 43, no. 3, 27 January 2007 (2007-01-27), pages 685-704, XP005863824 ISSN: 0306-4573 * Section 2.1.1 *  ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 26 February 2010 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- US 61115169 A
- US 36868909 A